# EUROPEAN PATENT SPECIFICATION

(11) **EP 4 099 468 B1**
(45) Date of publication and mention of the grant of the patent: **02.12.2026**
(21) Application number: 21747310.7
(22) Date of filing: 21.01.2021
(51) Int. Cl.: H01M 10/0567, H01M 10/0525, H01M 4/485, H01M 4/38, H01M 4/36, C07F 7/18, H01M 4/02

(54) **NON-AQUEOUS ELECTROLYTIC SOLUTION ADDITIVE, NON-AQUEOUS ELECTROLYTIC SOLUTION INCLUDING THE SAME, AND NON-AQUEOUS ELECTROLYTIC SOLUTION SECONDARY BATTERY**
ADDITIV FÜR NICHTWÄSSRIGE ELEKTROLYTLÖSUNG, NICHTWÄSSRIGE ELEKTROLYTLÖSUNG DASSELBE ENTHALTEND, UND SEKUNDÄRBATTERIE MIT NICHTWÄSSRIGER ELEKTROLYTLÖSUNG
ADDITIF POUR ÉLECTROLYTE NON-AQUEUX, ÉLECTROLYTE NON-AQUEUX LE CONTENANT, ET BATTERIE SECONDAIRE À ÉLECTROLYTE NON-AQUEUX

(30) Priority: 30.01.2020 JP 2020014239
(43) Date of publication of application: 07.12.2022
(73) Proprietor: Panasonic Intellectual Property Management Co., Ltd., Osaka-shi, Osaka 540-6207 (JP)
(72) Inventor: SHIBATA, Sho, Osaka-shi, Osaka 540-6207 (JP); SUZUKI, Hirotetsu, Osaka-shi, Osaka 540-6207 (JP); SAKATA, Motohiro, Osaka-shi, Osaka 540-6207 (JP)
(74) Representative: Novagraaf International SA
(86) International application number: PCT/JP2021/001957
(87) International publication number: WO 2021/153396

(56) References cited:
- EP-A1- 3 817 120
- WO-A1-2019/208153
- WO-A1-2020/003595
- WO-A1-2020/054863
- WO-A2-02/096914
- US-A- 4 507 490
- US-A1- 2013 183 576
- US-A1- 2016 141 598
- M. G. VORONKOV ET AL: "BIS(TRIALKOXYSILYLMETHYL) CHALCOGENIDES AND 2,2,6,6-TETRAMETHOXY-2,6-DISILA-1,4-CHALCOGENAOXANES", JOURNAL OF GENERAL CHEMISTRY USSR, vol. 60, no. 1, PART 02, 1 January 1990 (1990-01-01), pages 113 - 116, XP000160027, ISSN: 0022-1279
- TROFIMOV ET AL.: "Protected bis(hydroxyorganyl) polysulfides as modifiers of Li/S battery electrolyte", ELECTROCHIMICA ACTA, vol. 56, 2011, pages 2458 - 2463, XP028133084, DOI: 10.1016/j.electacta.2010.11.064

## Description

### [Technical Field]

The present invention relates to a nonaqueous electrolyte including an additive, and a nonaqueous electrolyte secondary battery.

### [Background Art]

A material containing a silicon element is promising as a high-capacity negative electrode material for a secondary battery. However, since the material containing a silicon element significantly expands and contracts with charge and discharge, it easily induces side reactions, and the capacity retention rate in charge/discharge cycles tends to be lowered.

Non-Patent Literature 1 reports that the capacity retention rate in charge/discharge cycles improves by adding a silane coupling agent containing a vinyl group to an electrolyte of a single electrode battery using a Si/C composite.

### [Citation List]

### Non-Patent Literature

Non-Patent Literature 1: Ionics, 2018, 24, 3691-3698

### Patent-Literature

WO 2019/208153 A1 discloses a non-aqueous electrolyte secondary battery that includes a sulfur-modified organic compound in the positive electrode and an alkali metal in the negative electrode.

US 2013/183576 A1 discloses a secondary battery comprising an electrode assembly in which a positive electrode and a negative electrode are arranged to face each other, an electrolyte liquid, and a package accommodating the electrode assembly and the electrolyte liquid, wherein the negative electrode comprises a negative electrode active substance containing at least one selected from a metal (a) capable of being alloyed with lithium and a metal oxide (b) capable of occluding and releasing lithium ions, a negative electrode binder, and a negative electrode current collector; and the electrolyte liquid comprises a sulfide compound.

WO 2020/003595 A1 discloses a non-aqueous electrolyte secondary battery using a negative electrode active material that includes a lithium silicate phase in which silicon particles are dispersed.

US 2016/141598 A1 relates to a non-aqueous electrolyte composition for lithium secondary batteries comprising a bis(3-trimethoxysilyl-1-propyl)disulfide compound.

Electrochimica Acta, vol. 56, 2011, pages 2458-2463 reports non-aqueous electrolyte compositions for lithium secondary batteries comprising a bis-alkoxysilyl polysulfide compound.

### [Summary of Invention]

It is difficult to stably improve capacity retention rate in charge/discharge cycles with the proposal of Non-Patent Literature 1.

The invention is as set out in the independent claims, further aspects of the invention are outlined in the dependent claims. Embodiments that do not fall within the scope of the claims do not describe part of the invention.

One aspect of the present disclosure relates to an additive for a nonaqueous electrolyte including a bis-alkoxysilyl compound, wherein the bis-alkoxysilyl compound includes two or more silyl groups coupled with a chain including a sulfide group, the two or more silyl groups each has at least one selected from the group consisting of an alkoxy group and an oxyalkyl group, and the oxyalkyl group is represented by -O-(CₓH₂ₓ₊₁O_{y}), where x is an integer of 1 or more, and y is an integer of 1 or more.

Another aspect of the present disclosure relates to a nonaqueous electrolyte including a nonaqueous solvent, a salt dissolved in the nonaqueous solvent, and the above-described additive for a nonaqueous electrolyte.

One aspect of the present invention relates to a nonaqueous electrolyte secondary battery including a negative electrode including a negative electrode mixture layer, a positive electrode, and a nonaqueous electrolyte, wherein the negative electrode mixture layer includes a negative electrode active material, the negative electrode active material includes a material containing a silicon element, the nonaqueous electrolyte comprises a nonaqueous solvent, a salt dissolved in the nonaqueous solvent, and an additive comprising a bis-alkoxysilyl compound,
the bis-alkoxysilyl compound has two silyl groups coupled with a chain including a sulfide group,
the two silyl groups each has at least one selected from the group consisting of an alkoxy group and an oxyalkyl group, and
the oxyalkyl group is represented by -O-(CₓH₂ₓ₊₁O_{y}), where x is an integer of 1 or more, and y is an integer of 1 or more.

According to the present invention, when the negative electrode active material contains the material containing a silicon element, capacity retention rate in charge/discharge cycles of a nonaqueous electrolyte secondary battery can be stably improved.

### [Brief Description of Drawings]

[FIG. 1]

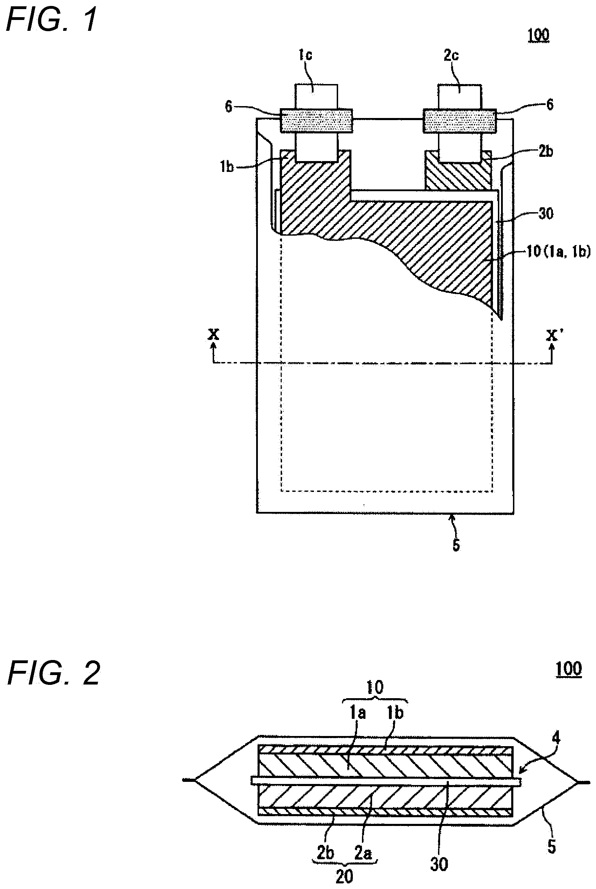

   FIG. 1 is a partially cut-away plan view schematically illustrating the structure of a nonaqueous electrolyte secondary battery according to an embodiment of the present disclosure.
[FIG. 2]
   FIG. 2 is a cross sectional view along line X-X' of the non-aqueous secondary battery shown in FIG. 1.
[FIG. 3]

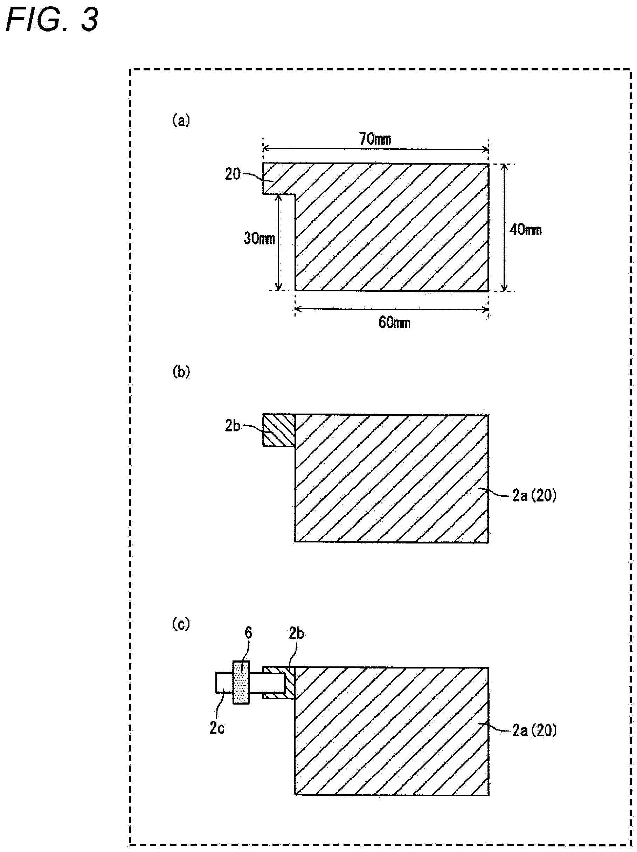

   FIG. 3 illustrates a production method of a negative electrode for performance evaluation.
[FIG. 4]

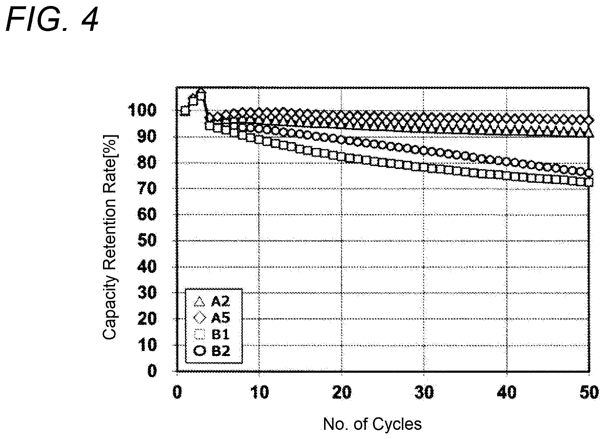

   FIG. 4 is a graph showing relation between the number of charge/discharge cycles and capacity retention rate of a nonaqueous electrolyte secondary battery.

### [Description of Embodiments]

### (Additive for nonaqueous electrolyte)

The additive for a nonaqueous electrolyte according to the embodiment of the present disclosure includes a bis-alkoxysilyl compound. The bis-alkoxysilyl compound has two silyl groups coupled with a chain including a sulfide group. Each of the two silyl groups has at least one selected from the group consisting of an alkoxy group and an oxyalkyl group, the oxyalkyl group is represented by -O-(CₓH₂ₓ₊₁O_{y}), where x is an integer of 1 or more, and y is an integer of 1 or more.

In the above-described configuration, the alkoxy group or oxyalkyl group of each silyl group is considered to form X-O-Si bonds with the surfaces of the material containing a silicon element. Here, X denotes the surface of the material containing a silicon element and O coupled with X denotes, for example, an O atom (or residue of OH group) that is present on the surface of the material containing a silicon element. By each of the alkoxy group or oxyalkyl group forming a bond with the surface of the material containing a silicon element, the surface of the material containing a silicon element is covered with a bis silyl sulfide structure having stable siloxane bonds at both ends. That is, the surfaces of the material containing a silicon element are covered with a coating containing a bis silyl sulfide structure (hereinafter also referred to as SSS coating). The SSS coating has a high elasticity, is stable against reversible elastic deformation, and is not easily damaged even when charge/discharge cycle is repeated. As a result, side reaction in the negative electrode is suppressed, and capacity retention rate in charge/discharge cycles is stably improved.

The bis-alkoxysilyl compound may be bis(alkoxysilyl alkyl)sulfide represented by general formula (1) below:

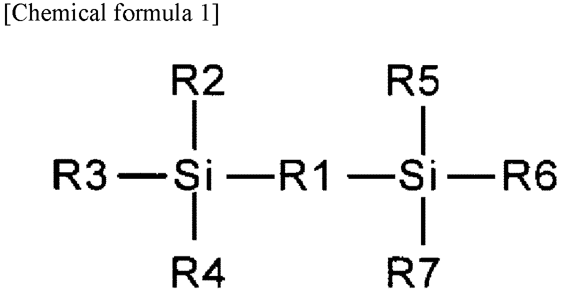

Here, R1 is a sulfide group represented by Cₓ₁H₂ₓ₁S_{z}, where x1 and z each is an integer of 1 or more. At least one of R2 to R4 is at least one selected from the group consisting of an alkoxy group having 1 to 6 carbon atoms and an oxyalkyl group represented by -O-(Cₓ₂H₂ₓ₂₊₁O_{y2}), where x2 is an integer of 1 or more, and y2 is an integer of 1 or more. At least one of R5 to R7 is at least one selected from the group consisting of an alkoxy group having 1 to 6 carbon atoms and an oxyalkyl group represented by -O-(Cₓ₃H₂ₓ₃₊₁O_{y3}), where x3 is an integer of 1 or more, and y3 is an integer of 1 or more. The remainder of R2 to R7 is each independently an alkyl group or oxyalkyl group represented by Cₓ₄H₂ₓ₄₊₁O_{y4}, where x4 is an integer of 1 or more, and y4 is an integer of 0 or more.
However, the oxyalkyl group is a group other than the alkoxy group.

The alkoxy group or oxyalkyl group included in R2 to R4 and R5 to R7 each forms a X-O-Si-R1 bond with the surface of the material containing a silicon element, and the surface of the material containing a silicon element is covered with a Si-R1-Si structure having stable siloxane bonds at both ends. That is, the surface of the material containing a silicon element is covered with an SSS coating including the Si-R1-Si structure.

In formula (1), the sulfide group(R1) represented by Cₓ₁H₂ₓ₁S_{z} may have a structure represented by R11-S_{z}-R12. Here, R11 and R12 are each independently an alkylene group with 1 or more carbon atoms. It is considered that such R1 is excellent in flexibility, has significant electron-shielding properties based on the S_{z} structure, and is more effective in suppressing side reactions.

R11 and R12 with a larger carbon number allow for better flexibility, which facilitates reversible deformation of the SSS coating. However, if the carbon number of R11 and R12 is excessively large, the alkylene chain becomes excessively long, the denseness of the SSS coating is reduced, and the effect of suppressing side reactions is reduced. Therefore, it is desirable that the carbon number of R11 and R12 is 1 to 6, and the carbon number of 2 to 4 is more desirable. Bis(alkoxysilyl alkyl)sulfide is desirably bis(alkoxysilyl C₁₋₆alkyl)sulfide, or may be bis(alkoxysilyl C₂₋₄alkyl)sulfide.

In the S_{z} group constituting R1, a larger number of continuous sulfur atoms allows for better flexibility, which facilitates reversible deformation of the SSS coating. However, if the number of sulfur atoms is excessively large, the denseness of the SSS coating is reduced, and the S_{z} group itself may cause side reactions. Therefore, it is desirable that the number of sulfur atoms of the S_{z} group is 1 to 6, and the number of sulfur atoms of 2 to 4 is more desirable. That is, bis(alkoxysilyl alkyl)sulfide is desirably bis(alkoxysilyl C₁₋₆alkyl)S₁₋₆ sulfide, or may be bis(alkoxysilyl C₂₋₄alkyl)S₂₋₄ sulfide.

At least one of R2 to R4 may be at least one selected from the group consisting of an alkoxy group having 1 to 6 carbon atoms, and an oxyalkyl group represented by -O-(Cₓ₂H₂ₓ₂₊₁O_{y2}), where x2 is an integer of 1 to 6, and y2 is 1 or 2; and at least one of R5 to R7 is at least one selected from the group consisting of an alkoxy group having 1 to 6 carbon atoms, and an oxyalkyl group represented by -O-(Cₓ₃H₂ₓ₃₊₁O_{y3}), where x3 is an integer of 1 to 6, and y3 is 1 or 2. The alkoxy group or oxyalkyl group may be smaller in view of increasing reactivity with the surfaces of the material containing a silicon element, and the carbon number of the alkoxy group or oxyalkyl group may be, for example, 1 to 3.

The remainder of R2 to R7 is each independently an alkyl group or oxyalkyl group represented by Cₓ₄H₂ₓ₄₊₁O_{y4}, where x4 is an integer of 1 to 6, and y4 is an integer of 0 or more and 2 or less. In view of reducing steric hindrance at the time of reaction, the carbon number of the group represented by Cₓ₄H₂ₓ₄₊₁O_{y4} may be 1 to 6, or may be 1 to 3. Each of R2 to R4 is independent, and R2 to R4 may each have the same or a different carbon number, or two of R2 to R4 may have the same carbon number. Similarly, each of R5 to R7 is independent, and R5 to R7 may each have the same or a different carbon number, or two of R5 to R7 may have the same carbon number.

The two alkoxysilyl groups (R2R3R4Si-, or R5R6R7Si-) coupled with R1 may be the same or different from each other. However, to form a more symmetrical SSS coating structure for a more stable structure, the two alkoxysilyl groups coupled with R1 may be the same structure.

For the bis(trialkoxysilyl C₁₋₆alkyl)S₁₋₆ sulfide, readily available examples include at least one selected from the group consisting of bis(triethoxysilylpropyl)sulfide, bis(triethoxysilylpropyl)disulfide, bis(triethoxysilylpropyl)trisulfide, and bis(triethoxysilylpropyl)tetrasulfide.

### (Nonaqueous electrolyte)

The nonaqueous electrolyte includes a nonaqueous solvent, a salt (solute) dissolved in the nonaqueous solvent, and the above-described additive for a nonaqueous electrolyte. The salt (solute) is an electrolyte salt whose ions dissociate in the nonaqueous solvent. When the nonaqueous electrolyte is used for a lithium ion secondary battery, the salt includes at least a lithium salt. The component of the nonaqueous electrolyte other than the nonaqueous solvent and salt is an additive, and at least a part of the additive is the above-described bis-alkoxysilyl compound.

The concentration of the bis-alkoxysilyl compound in the nonaqueous electrolyte may be, for example, 5 mass% or less, may be 2 mass% or less, or may be 1 mass% or less. The concentration in this range is sufficient for forming a good and suitable SSS coating, regardless of the amount of the material containing a silicon element contained in the negative electrode active material. With a concentration of the bis-alkoxysilyl compound in the nonaqueous electrolyte of, for example, 0.05 mass% or more, it is considered that a considerable SSS coating is formed, and a significant effect of improving capacity retention rate in the charge/discharge cycle of a nonaqueous electrolyte secondary battery can be obtained.

However, since the bis-alkoxysilyl compound reacts in the nonaqueous electrolyte secondary battery, the concentration in the nonaqueous electrolyte gradually decreases. Therefore, it is sufficient that the bis-alkoxysilyl compound of the detection-limit or more remains in the nonaqueous electrolyte taken-out from disassembled batteries of those completed nonaqueous electrolyte secondary batteries or nonaqueous electrolyte secondary batteries distributed on the market.

For the nonaqueous solvent, for example, cyclic carbonate, chain carbonate, cyclic carboxylate, chain carboxylate, etc. are used. Examples of the cyclic carbonate include propylene carbonate (PC), ethylene carbonate (EC), and vinylene carbonate (VC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl acetate, ethyl acetate, propyl acetate, methyl propionate (MP), ethyl propionate (EP), and the like. A kind of nonaqueous solvent may be used singly, or two or more kinds thereof may be used in combination.

Of these examples, the chain carboxylate is suitable for preparation of a low viscosity nonaqueous electrolyte. Thus, the nonaqueous electrolyte may include 1 mass% or more and 90 mass% or less of the chain carboxylate. Among the chain carboxylate, methyl acetate has a particularly low viscosity. Therefore, 90 mass% or more of the chain carboxylate may be methyl acetate.

Examples of the nonaqueous solvent also include cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl-furan, 1,8-cineol, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxyethane, 1,2-dibutoxy ethane, diethylene glycol dimethylether, diethylene glycol diethyl ether, diethylene glycol dibutyl ether, 1,1-dimethoxy methane, 1,1-diethoxy ethane, triethylene glycol dimethylether, tetraethylene glycol dimethyl ether, and the like.

These solvents may be a fluorinated solvent in which part of hydrogen atoms is substituted with a fluorine atom. Fluoro ethylene carbonate (FEC) may be used as the fluorinated solvent.

Examples of the lithium salt include, a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN (C₂F₅SO₂)₂, etc.), a lithium halide (LiCl, LiBr, LiI, etc.) and the like. A kind of lithium salt may be used singly, or two or more kinds thereof may be used in combination.

The concentration of the lithium salt in the nonaqueous electrolyte may be 0.5 mol/liter or more and 2 mol/liter or less, or may be 1 mol/liter or more and 1.5 mol/liter or less. By controlling the concentration of lithium salt to be in the above-described range, a nonaqueous electrolyte having excellent ion conductivity and low viscosity can be obtained.

Examples of the additive other than the alkoxysilyl compound include 1,3-propanesultone, methylbenzenesulfonate, cyclohexylbenzene, biphenyl, diphenyl ether, and fluorobenzene.

### (Nonaqueous electrolyte secondary battery)

A nonaqueous electrolyte secondary battery according to the present disclosure includes a positive electrode, a negative electrode, and the nonaqueous electrolyte described above.

### (Negative Electrode)

The negative electrode includes, for example, a negative electrode current collector, and a negative electrode mixture layer formed on the surface of the negative electrode current collector. The negative electrode mixture layer contains a negative electrode active material as an essential component, and may contain a binder, a conductive material, a thickener, and the like as an optional component. Known materials can be used for the optional component such as the binder, the conductive material, and the thickener.

The negative electrode mixture layer can be formed, for example, by applying a negative electrode slurry, in which a negative electrode mixture containing a negative electrode active material and a predetermined optional component are dispersed in a dispersion medium, on a surface of the negative electrode current collector and drying. The dried coating film may be rolled, if necessary. The negative electrode mixture layer may be formed on one surface of the negative electrode current collector, or on both surfaces thereof.

The negative electrode active material includes a material containing a silicon element. The material containing a silicon element may be treated as a type of alloy based materials. Here, the alloy based material refers to a material containing an element capable of forming an alloy with lithium. Silicon and tin are examples of the element that can form an alloy with lithium, and silicon (Si) is particularly promising.

As the material containing silicon, a silicon alloy, a silicon compound, or the like may be used, and a composite material may also be used. Among them, a composite material containing a lithium ion conductive phase and silicon particles dispersed in the lithium ion conductive phase is promising. As the lithium ion conductive phase, for example, a silicon oxide phase, silicate phase, carbon phase, or the like can be used. The silicon oxide phase has a relatively large irreversible capacity. On the other hand, the silicate phase is preferable in that its irreversible capacity is small.

The main component (e.g., 95 to 100 mass%) of the silicon oxide phase may be silicon dioxide. The composition of the composite material including the silicon oxide phase and silicon particles dispersed therein, as a whole, can be expressed as SiOₓ. SiOₓ has a structure in which fine particles of silicon are dispersed in SiO₂ in an amorphous form. The content ratio x of oxygen to silicon is, for example, 0.5 ≤ x < 2.0, more preferably 0.8 ≤ x ≤ 1.5.

The silicate phase may include, for example, at least one selected from the group consisting of Group 1 element and Group 2 element of the long-form periodic table. Examples of the Group 1 element and Group 2 element of the long-form periodic table include lithium (Li), potassium (K), sodium (Na), magnesium (Mg), calcium (Ca), strontium (Sr), barium (Ba), and the like. Other elements that can be included are aluminum (Al), boron (B), lanthanum (La), phosphorus (P), zirconium (Zr), titanium (Ti), and the like. In particular, the silicate phase containing lithium (hereinafter also referred to as lithium silicate phase) is preferable because of its small irreversible capacity and high initial charge/discharge efficiency.

The lithium silicate phase may be any oxide phase containing lithium (Li), silicon (Si), and oxygen (O), and may include other element. The atomic ratio of O to Si in the lithium silicate phase: O/Si is, for example, larger than 2 and less than 4. Preferably, O/Si is larger than 2 and less than 3. The atomic ratio of Li to Si in the silicate phase: Li/Si is, for example, larger than 0 and less than 4. The lithium silicate phase may have a composition represented by the formula: Li_{2z}SiO_{2+z} (0 < z < 2). Preferably, the relation 0 < z < 1 is satisfied, and z=1/2 is more preferable. Examples of the elements other than Li, Si, and O included in the lithium silicate phase include iron (Fe), chromium (Cr), nickel (Ni), manganese (Mn), copper (Cu), molybdenum (Mo), zinc (Zn), aluminum (Al), etc.

The carbon phase may be composed of, for example, an amorphous carbon with less crystallinity. The amorphous carbon may be, for example, hard carbon, soft carbon, or something else.

In addition to the material containing a silicon element, the negative electrode active material may include a material that electrochemically stores and releases lithium ions, lithium metal, lithium alloy, and the like. As the material that electrochemically stores and releases lithium ions, a carbon material is preferable. Examples of the carbon material include graphite, soft carbon, hard carbon, and the like. Particularly, graphite with excellent charge/discharge stability and low irreversible capacity is preferable.

For the negative electrode current collector, for example, a metal sheet or metal foil is used. As the material of the negative electrode current collector, stainless steel, nickel, nickel alloy, copper, copper alloy, and the like can be exemplified.

### (Positive Electrode)

The positive electrode includes, for example, a positive electrode current collector, and a positive electrode mixture layer formed on the surface of the positive electrode current collector. The positive electrode mixture layer contains a positive electrode active material as an essential component, and may contain a binder, a conductive material, a thickener, and the like as an optional component. Known materials can be used for the optional component such as the binder, the conductive material, and the thickener.

The positive electrode mixture layer can be formed, for example, by applying a positive electrode slurry, in which a positive electrode mixture containing a positive electrode active material and a predetermined optional component are dispersed in a dispersion medium on a surface of the positive electrode current collector and drying. The dried coating film may be rolled, if necessary. The positive electrode mixture layer may be formed on one surface of the positive electrode current collector, or may be formed on both surfaces thereof.

The positive electrode active material includes, for example, a lithium-containing composite oxide. The lithium-containing composite oxide is not particularly limited, but one having a layered rock salt type crystal structure containing lithium and transition metal is promising. Specifically, the lithium-containing composite oxide may be, for example, LiₐNi_{1-x-y}CoₓM_{y}O₂ (where 0 < a ≤ 1.2, 0 ≤ x ≤ 0.1, 0 ≤ y ≤ 0.1, 0 < x+y ≤ 0.1, and M is at least one selected from the group consisting of Na, Mg, Sc, Y, Mn, Fe, Cu, Zn, Al, Cr, Pb, Sb, and B). From the viewpoint of stabilities of the crystal structure, Al may be contained as M. Note that the value "a" indicating the molar ratio of lithium is increased or decreased by charging and discharging. Specific examples include LiNi_{0.9}Co_{0.05}Al_{0.05}O₂, LiNi_{0.91}Co_{0.06}Al_{0.03}O₂, and the like.

The positive electrode active material (particularly lithium-containing composite oxide) usually is in the form of secondary particles of coagulated primary particles. The average particle size of the positive electrode active material may be, for example, 2 µm or more, and 20 µm or less. Here, the average particle size refers to a median diameter in which the cumulative volume in volume-based particle size distribution is 50%. The volume-based particle size distribution can be measured by laser diffraction particle size distribution analyzer.

For the positive electrode current collector, for example, a metal sheet or metal foil is used. As the material of the positive electrode current collector, stainless steel, aluminum, aluminum alloy, titanium, and the like can be exemplified.

Examples of the conductive material used for the positive electrode mixture layer and negative electrode mixture layer include carbon materials such as carbon black (CB), acetylene black (AB), Ketjen Black (KB), carbon nanotube (CNT), and graphite. A kind of the conductive material may be used singly, or two or more kinds may be used in combination.

Examples of the binder for the positive electrode mixture layer and negative electrode mixture layer include fluororesin (polytetrafluoroethylene, polyvinylidene fluoride, etc.), polyacrylonitrile (PAN), polyimide resin, acrylic resin, polyolefin resin, and the like. A kind of the binder may be used singly, or two or more kinds may be used in combination.

### (Separator)

Usually, a separator is interposed between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin, such as polypropylene and polyethylene.

In an example structure of a secondary battery, an electrode group and a nonaqueous electrolyte are accommodated in an outer package, the electrode group having a positive electrode and a negative electrode wound with a separator. Alternatively, instead of the wound electrode group, other forms of electrode group may be applied, such as a laminated electrode group in which a positive electrode and negative electrode are laminated with a separator interposed. The nonaqueous electrolyte secondary battery may be in any form, e.g., cylindrical, prismatic, coin-shaped, button shaped, sheet (laminate) shaped, etc.

Referring to FIG. 1 and FIG. 2, a nonaqueous electrolyte secondary battery according to an embodiment of the present disclosure will be described below. FIG. 1 is a partially cut-away plan view schematically showing an exemplary nonaqueous electrolyte secondary battery structure. FIG. 2 is a cross sectional view along line X-X' in FIG. 1.

As shown in FIG. 1 and FIG. 2, a nonaqueous electrolyte secondary battery 100 is a sheet type battery, and includes an electrode group 4 and an outer case 5 for accommodating the electrode group 4.

The electrode group 4 has a structure in which a positive electrode 10, a separator 30, and a negative electrode 20 are stacked in this order, and the positive electrode 10 and the negative electrode 20 face each other with the separator 30 interposed therebetween. The electrode group 4 is formed in this manner. The electrode group 4 is impregnated with a nonaqueous electrolyte.

The positive electrode 10 includes a positive electrode active material layer 1a and a positive electrode current collector 1b. The positive electrode active material layer 1a is formed on the surface of the positive electrode current collector 1b.

The negative electrode 20 includes a negative electrode mixture layer 2a and a negative electrode current collector 2b. The negative electrode mixture layer 2a is formed on the surface of the negative electrode current collector 2b.

A negative electrode tab lead 1c is connected to the negative electrode current collector 1b, and a negative electrode tab lead 2c is connected to the negative electrode current collector 2b. The positive electrode tab lead 1c and negative electrode tab lead 2c each extends out of the outer case 5.

An insulating tab film 6 insulates the positive electrode tab lead 1c from the outer case 5, and the negative electrode tab lead 2c from the outer case 5.

In the following, the present disclosure will be specifically described based on Examples and Comparative Examples, but the present disclosure is not limited to Examples below.

### <Example 1>

### (1) Preparation of negative electrode

A negative electrode slurry was made by mixing SiOₓ (x=1) (Shin-Etsu Chemical Co., KSC1064), graphite, and an aqueous solution of polyacrylamide (binder) so that the mass ratio of SiOₓ: graphite: polyacrylamide was 75:15:10; further adding water to the mixture; and agitating the mixture. Next, a coating film was formed by applying the negative electrode slurry on one side of a negative electrode current collector (electrolytic copper foil). After the coating film was dried, the coating film was rolled together with the negative electrode current collector by a roller to obtain a negative electrode including a negative electrode mixture layer.

A negative electrode was cut into the form shown in FIG. 3 (a) and a negative electrode 20 for evaluation was obtained. In FIG. 3 (a), the region of 60 mm × 40 mm is a region to function as a negative electrode, and the protrusion region of 10 mm × 10 mm is a region that connects with the tab lead 2c. Thereafter, as shown in FIG. 3 (b), the negative electrode mixture layer 2a formed on the above-described connecting region was scraped to expose the negative electrode current collector 2b. Thereafter, as shown in FIG. 3 (c), the exposed part of the negative electrode current collector 2b was connected to the negative electrode tab lead 2c and a predetermined region of the outer periphery of the negative electrode tab lead 2c was covered with an insulating tab film 6.

### (2) Preparation of counter electrode

A counter electrode was produced by attaching a lithium metal foil to one surface of an electrolytic copper foil (current collector).

The counter electrode was cut out into the same shape as the negative electrode, and the lithium metal foil formed on the connecting region formed in the same manner as the negative electrode was peeled off to expose the current collector. The exposed part of the current collector was connected to the tab lead in the same manner as the negative electrode, and afterwards, a predetermined region of the outer periphery of the tab lead was covered with an insulating tab film.

### (3) Preparation of nonaqueous electrolyte

A nonaqueous electrolyte was prepared by dissolving LiPF₆ in a solvent mixture of fluoroethylene carbonate (FEC) and dimethyl carbonate (DMC) (volume ratio 20:80) at a concentration of 1 mol/L. To the nonaqueous electrolyte, 0.25 mass% of bis(triethoxysilylpropyl)tetrasulfide (TESPT) represented by formula (1-1) below was added.

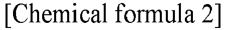

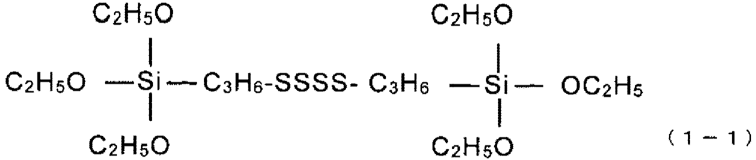

### (4) Preparation of cell for evaluation

Using the negative electrode for evaluation as described above and a counter electrode, a cell with a designed capacity of 114 mAh, which is regulated by the negative electrode, was produced. First, the negative electrode and counter electrode were allowed to face each other with two sheets of a polyethylene made separator (thickness 15 µm) having an aramid coating so that the negative electrode mixture layer overlaps with the lithium metal foil, thereby producing an electrode group. Next, an A1 laminate film (thickness 100 µm) cut into a rectangular shape was folded in half, and longitudinal ends were heat-sealed at 230°C to form an envelope. Afterwards, the fabricated electrode group was put into the envelope from one of short sides, and heat-sealing at 230°C was performed, aligning the position of the thermal welding resin of respective tab leads with the end face of the A1 laminate film. Next, 1.2 cm³ of the nonaqueous electrolyte was injected from the not heat-sealed portion of the short side of the envelope, and after the injection, the operation of allowing it to stand for 3 minutes under a reduced pressure of 0.02 MPa, and to return to an atmospheric pressure environment was carried out twice to impregnate the negative electrode mixture layer with the nonaqueous electrolyte. Finally, the end face of the liquid-injected side of the Al laminate film was heat-sealed at 230°C to obtain a cell A1 for evaluation. The evaluation cell was prepared in a dry air atmosphere having a dew point of -60°C or less.

### (5) Battery evaluation

The evaluation cell was sandwiched with a clamp between a pair of 10 × 5 cm stainless steel (thickness 6 mm) plates and fixed under pressure with 3.2 MPa.

### <First cycle>

In a thermostatic chamber at 25°C, the negative electrode was charged with lithium over 2 hours at a constant current of 0.05 C (1 C is a current value at which designed capacity is discharged by an hour), and the negative electrode was allowed to stand for 12 hours. The negative electrode was then charged further to a cell voltage of 0.01 V with a constant current of 0.05 C, and allowed to stand for 20 minutes. Lithium was then discharged from the negative electrode to a cell voltage of 1.5 V at a constant current of 0.05 C, and the cell was allowed to stand for 20 minutes.

### <Second to third cycles>

The negative electrode was then charged with lithium to a cell voltage of 0.01 V with a constant current of 0.05 C, and allowed to stand for 20 minutes. Lithium was then discharged from the negative electrode to a cell voltage of 1.5 V at a constant current of 0.05 C, and the cell was allowed to stand for 20 minutes.

### <Fourth to 50th cycles>

The negative electrode was charged with lithium at a constant current of 0.3 C to a cell voltage of 0.01 V, and allowed to stand for 20 minutes, and thereafter, lithium was discharged from the negative electrode to a cell voltage of 1.5 V at a constant current of 0.3 C, and the cell was allowed to stand for 20 minutes: this cycle was repeated.

The ratio of the capacity obtained by the lithium discharge of the 50th cycle to the capacity obtained by the lithium discharge of 1st cycle was determined as 50th cycle capacity retention rate. Table 1 shows the results.

### <Examples 2 to 3>

Evaluation cells A2 to A3 were prepared and evaluated in the same manner as in Example 1, except that in preparation of the nonaqueous electrolyte, the content of TESPT to be added to the nonaqueous electrolyte was changed as shown in Table 1.

### <Examples 4 to 6>

Evaluation cells A4 to A6 were prepared and evaluated in the same manner as in Example 1, except that bis(triethoxysilylpropyl)disulfide (TESPD) represented by formula (1-2) below was added in an amount shown in Table 1 to the nonaqueous electrolyte instead of TESPT in preparation of the nonaqueous electrolyte.

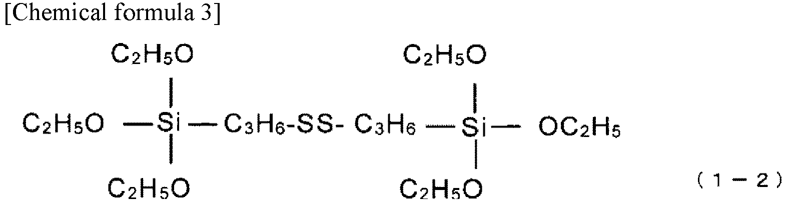

### <Comparative Example 1>

Evaluation cell B1 was prepared and evaluated in the same manner as in Example 1, except that vinyltris(2-methoxyethoxy)silane (VTMS) represented by formula (2) below was added in an amount shown in Table 1 to the nonaqueous electrolyte instead of TESPT in preparation of the nonaqueous electrolyte. VTMS is the additive used in Non-Patent Literature 1.

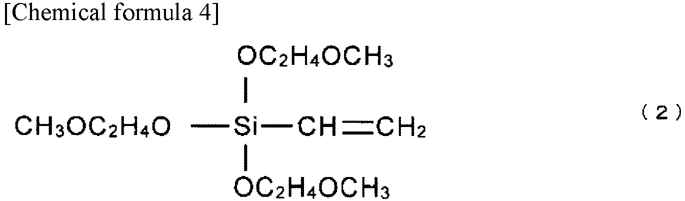

### <Comparative Example 2>

An evaluation cell B2 was prepared and evaluated in the same manner as in Example 1, except that in preparation of the nonaqueous electrolyte, TESPT was not added.

**[Table 1]**

| | Additive Content (wt%) | | | 50th Cycle capacity retention rate (%) |
|---|---|---|---|---|
| | TESPT | TESPD | VTMS | |
| A1 | 0.25 | 0 | 0 | 86.0 |
| A2 | 0.5 | 0 | 0 | 91.8 |
| A3 | 1 | 0 | 0 | 87.9 |
| A4 | 0 | 0.25 | 0 | 90.6 |
| A5 | 0 | 0.5 | 0 | 96.4 |
| A6 | 0 | 1 | 0 | 87.4 |
| B1 | 0 | 0 | 0.5 | 72.7 |
| B2 | 0 | 0 | 0 | 76.3 |

FIG. 4 shows the relation between the charge/discharge cycle numbers and capacity retention rate of the evaluation cells A2, A5, B1, and B2.

Table 1 and FIG. 4 show that the capacity retention rate is improved when TESPT, i.e., the alkoxysilyl compound represented by formula (1-1), or TESPD, i.e., the alkoxysilyl compound represented by formula (1-2), is added to the nonaqueous electrolyte.

On the other hand, as shown in FIG. 4, VTMS used in Non-Patent Literature 1 could not improve the capacity retention rate.

### [Industrial Applicability]

The additive for a nonaqueous electrolyte according to the present disclosure is suitably used for a nonaqueous electrolyte secondary battery in which a negative electrode active material contains a material containing a silicon element.

### [Reference Signs List]

- 1a: Positive Electrode Mixture Layer
- 1b: Positive Electrode Current Collector
- 1c: Positive Electrode Tab Lead
- 2a: Negative Electrode Mixture Layer
- 2b: Negative Electrode Current Collector
- 2c: Negative Electrode Tab Lead
- 4: Electrode Group
- 5: Outer Case
- 6: Insulating tab film
- 10: Positive Electrode
- 20: Negative Electrode
- 30: Separator
- 100: Lithium ion Secondary Battery

## Claims

1. A nonaqueous electrolyte secondary battery (100) comprising a negative electrode (20) including a negative electrode mixture layer (2a), a positive electrode (10), and a nonaqueous electrolyte, wherein
the negative electrode mixture layer (2a) contains a negative electrode active material,
the negative electrode active material is a material containing a silicon element,
the nonaqueous electrolyte comprises a nonaqueous solvent, a salt dissolved in the nonaqueous solvent, and an additive comprising a bis-alkoxysilyl compound,
the bis-alkoxysilyl compound has two silyl groups coupled with a chain including a sulfide group,
the two silyl groups each has at least one selected from the group consisting of an alkoxy group and an oxyalkyl group, and
the oxyalkyl group is represented by -O-(CₓH₂ₓ₊₁O_{y}), where x is an integer of 1 or more, and y is an integer of 1 or more.

2. The nonaqueous electrolyte secondary battery (100) of claim 1, wherein the bis-alkoxysilyl compound is at least one selected from the group consisting of bis(alkoxysilyl alkyl)sulfide represented by general formula (1): 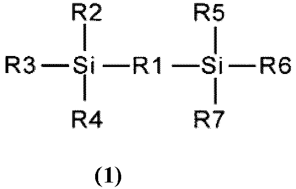 wherein
R1 is the sulfide group represented by Cₓ₁H₂ₓ₁S_{z}, where x1 and z is each an integer of 1 or more,
at least one of R2 to R4 is at least one selected from the group consisting of an alkoxy group having 1 to 6 carbon atoms, and an oxyalkyl group represented by -O-(Cₓ₂H₂ₓ₂₊₁O_{y2}), where x2 is an integer of 1 or more, and y2 is an integer of 1 or more,
at least one of R5 to R7 is at least one selected from the group consisting of an alkoxy group having 1 to 6 carbon atoms, and an oxyalkyl group represented by -O-(Cₓ₃H₂ₓ₃₊₁O_{y3}), where x3 is an integer of 1 or more, and y3 is an integer of 1 or more, and
the remainder of R2 to R7 is each independently an alkyl group or oxyalkyl group represented by Cₓ₄H₂ₓ₄₊₁O_{y4}, where x4 is an integer of 1 or more, and y4 is an integer of 0 or more.

3. The nonaqueous electrolyte secondary battery (100) of claim 2, wherein R1 is represented by R11-S_{z}-R12,
R11 and R12 are each an alkylene group having 1 or more carbon atoms.

4. The nonaqueous electrolyte secondary battery (100) of claim 3, wherein the bis(alkoxysilyl alkyl)sulfide is bis(trialkoxysilyl C₁₋₆alkyl)S₁₋₆ sulfide.

5. The nonaqueous electrolyte secondary battery (100) of claim 4, wherein the bis(trialkoxysilyl C₁₋₆alkyl)S₁₋₆ sulfide is at least one selected from the group consisting of bis(triethoxysilylpropyl)sulfide, bis(triethoxysilylpropyl)disulfide, bis(triethoxysilylpropyl)trisulfide, and bis(triethoxysilylpropyl)tetrasulfide.

6. The nonaqueous electrolyte secondary battery (100) according to any one of claims 1 to 5, wherein a concentration of the additive is 5 mass% or less.

7. The nonaqueous electrolyte secondary battery (100) of claim 6, wherein a concentration of the additive is 0.05 mass% or more.

8. The nonaqueous electrolyte secondary battery (100) according to any one of claims 1 to 7, wherein the material containing a silicon element is a composite material, and
the composite material includes a lithium ion conductive phase and silicon particles dispersed in the lithium ion conductive phase.

## Patentansprüche

1. Sekundärbatterie mit nichtwässrigem Elektrolyt (100), umfassend eine negative Elektrode (20), die eine negative Elektrodenmischungsschicht (2a) einschließt, eine positive Elektrode (10) und einen nichtwässrigen Elektrolyt, wobei
die negative Elektrodenmischungsschicht (2a) ein negatives Elektrodenaktivmaterial enthält,
das negative Elektrodenaktivmaterial ein Material ist, das ein Siliciumelement enthält,
der nichtwässrige Elektrolyt ein nichtwässriges Lösungsmittel, ein in dem nichtwässrigen Lösungsmittel gelöstes Salz und ein Additiv, das eine Bis-Alkoxysilyl-Verbindung umfasst, umfasst,
die Bis-Alkoxysilyl-Verbindung zwei Silylgruppen aufweist, die mit einer Kette gekoppelt sind, die eine Sulfidgruppe einschließt,
die zwei Silylgruppen jeweils mindestens eines aufweisen, das aus der Gruppe bestehend aus einer Alkoxygruppe und einer Oxyalkylgruppe ausgewählt ist, und
die Oxyalkylgruppe durch -O-(CₓH₂ₓ₊₁O_{y}) dargestellt ist, wobei x eine ganze Zahl von 1 oder mehr ist und y eine ganze Zahl von 1 oder mehr ist.

2. Sekundärbatterie mit nichtwässrigem Elektrolyt (100) nach Anspruch 1, wobei die Bis-Alkoxysilyl-Verbindung mindestens eines ist, das aus der Gruppe bestehend aus einem Bis(alkoxysilyl alkyl)sulfid, das durch die allgemeine Formel (1) dargestellt ist, ausgewählt ist: 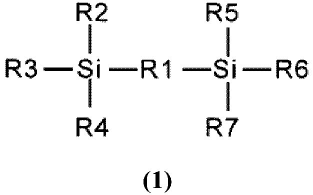 wobei
R1 die Sulfidgruppe ist, die durch Cₓ₁H₂ₓ₁S_{z} dargestellt ist, wobei x1 und z jeweils eine ganze Zahl von 1 oder mehr sind,
mindestens eines von R2 bis R4 mindestens eines ist, das aus der Gruppe bestehend aus einer Alkoxygruppe mit 1 bis 6 Kohlenstoffatomen und einer Oxyalkylgruppe, die durch -O-(Cₓ₂H₂ₓ₂₊₁O_{y2}) dargestellt ist, ausgewählt ist, wobei x2 eine ganze Zahl von 1 oder mehr ist und y2 eine ganze Zahl von 1 oder mehr ist,
mindestens eines von R5 bis R7 mindestens eines ist, das aus der Gruppe bestehend aus einer Alkoxygruppe mit 1 bis 6 Kohlenstoffatomen und einer Oxyalkylgruppe, die durch -O-(Cₓ₃H₂ₓ₃₊₁O_{y3}) dargestellt ist, ausgewählt ist, wobei x3 eine ganze Zahl von 1 oder mehr ist und y3 eine ganze Zahl von 1 oder mehr ist, und
der Rest von R2 bis R7 jeweils unabhängig eine Alkylgruppe oder Oxyalkylgruppe ist, die durch Cₓ₄H₂ₓ₄₊₁O_{y4} dargestellt ist, wobei x4 eine ganze Zahl von 1 oder mehr ist und y4 eine ganze Zahl von 0 oder mehr ist.

3. Sekundärbatterie mit nichtwässrigem Elektrolyt (100) nach Anspruch 2, wobei R1 durch R11-S_{z}-R12 dargestellt ist,
R11 und R12 jeweils eine Alkylengruppe mit 1 oder mehr Kohlenstoffatomen sind.

4. Sekundärbatterie mit nichtwässrigem Elektrolyt (100) nach Anspruch 3, wobei das Bis(alkoxysilyl alkyl)sulfid ein Bis(trialkoxysilyl C₁₋₆alkyl)S₁₋₆ sulfid ist.

5. Sekundärbatterie mit nichtwässrigem Elektrolyt (100) nach Anspruch 4, wobei das Bis(trialkoxysilyl C₁₋₆alkyl)S₁₋₆ sulfid mindestens eines ist, das aus der Gruppe bestehend aus Bis(triethoxysilylpropyl)sulfid, Bis(triethoxysilylpropyl)disulfid, Bis(triethoxysilylpropyl)trisulfid und Bis(triethoxysilylpropyl)tetrasulfid ausgewählt ist.

6. Sekundärbatterie mit nichtwässrigem Elektrolyt (100) nach einem der Ansprüche 1 bis 5, wobei eine Konzentration des Additivs 5 Massen-% oder weniger beträgt.

7. Sekundärbatterie mit nichtwässrigem Elektrolyt (100) nach Anspruch 6, wobei eine Konzentration des Additivs 0,05 Massen-% oder mehr beträgt.

8. Sekundärbatterie mit nichtwässrigem Elektrolyt (100) nach einem der Ansprüche 1 bis 7, wobei das Material, das ein Siliciumelement enthält, ein Verbundmaterial ist, und das Verbundmaterial eine lithiumionenleitende Phase und in der lithiumionenleitenden Phase dispergierte Siliciumpartikel einschließt.

## Revendications

1. Batterie secondaire à électrolyte non aqueux (100) comprenant une électrode négative (20) incluant une couche de mélange d'électrode négative (2a), une électrode positive (10), et un électrolyte non aqueux, dans laquelle
la couche de mélange d'électrode négative (2a) contient un matériau actif d'électrode négative,
le matériau actif d'électrode négative est un matériau contenant un élément silicium,
l'électrolyte non aqueux comprend un solvant non aqueux, un sel dissous dans le solvant non aqueux, et un additif comprenant un composé bis-alkoxysilyle,
le composé bis-alkoxysilyle a deux groupes silyle couplés à une chaîne incluant un groupe sulfure,
les deux groupes silyle ont chacun au moins un choisi dans le groupe constitué d'un groupe alkoxy et d'un groupe oxyalkyle, et
le groupe oxyalkyle est représenté par -O-(CₓH₂ₓ₊₁O_{y}), où x est un nombre entier supérieur ou égal à 1, et y est un nombre entier supérieur ou égal à 1.

2. Batterie secondaire à électrolyte non aqueux (100) selon la revendication 1, dans laquelle le composé bis-alkoxysilyle est au moins un choisi dans le groupe constitué d'un bis(alkoxysilyl alkyl)sulfure représenté par la formule générale (1) : 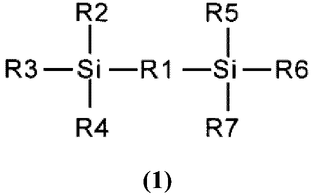 dans laquelle
R1 est le groupe sulfure représenté par Cₓ₁H₂ₓ₁S_{z}, où x1 et z sont chacun un nombre entier supérieur ou égal à 1,
au moins un de R2 à R4 est au moins un choisi dans le groupe constitué d'un groupe alkoxy ayant 1 à 6 atomes de carbone, et d'un groupe oxyalkyle représenté par -O-(Cₓ₂H₂ₓ₂₊₁O_{y2}), où x2 est un nombre entier supérieur ou égal à 1, et y2 est un nombre entier supérieur ou égal à 1,
au moins un de R5 à R7 est au moins un choisi dans le groupe constitué d'un groupe alkoxy ayant 1 à 6 atomes de carbone, et d'un groupe oxyalkyle représenté par -O-(Cₓ₃H₂ₓ₃₊₁O_{y3}), où x3 est un nombre entier supérieur ou égal à 1, et y3 est un nombre entier supérieur ou égal à 1, et
le reste de R2 à R7 est chacun indépendamment un groupe alkyle ou un groupe oxyalkyle représenté par Cₓ₄H₂ₓ₄₊₁O_{y4}, où x4 est un nombre entier supérieur ou égal à 1, et y4 est un nombre entier supérieur ou égal à 0.

3. Batterie secondaire à électrolyte non aqueux (100) selon la revendication 2, dans laquelle R1 est représenté par R11-S_{z}-R12,
R11 et R12 sont chacun un groupe alkylène ayant 1 ou plusieurs atomes de carbone.

4. Batterie secondaire à électrolyte non aqueux (100) selon la revendication 3, dans laquelle le bis(alkoxysilyl alkyl)sulfure est un bis(trialkoxysilyl C₁₋₆alkyl)S₁₋₆ sulfure.

5. Batterie secondaire à électrolyte non aqueux (100) selon la revendication 4, dans laquelle le bis(trialkoxysilyl C₁₋₆alkyl)S₁₋₆ sulfure est au moins un choisi dans le groupe constitué de bis(triéthoxysilylpropyl)sulfure, bis(triéthoxysilylpropyl)disulfure, bis(triéthoxysilylpropyl)trisulfure, et bis(triéthoxysilylpropyl)tétrasulfure.

6. Batterie secondaire à électrolyte non aqueux (100) selon l'une quelconque des revendications 1 à 5, dans laquelle une concentration de l'additif est de 5 % en masse ou moins.

7. Batterie secondaire à électrolyte non aqueux (100) selon la revendication 6, dans laquelle une concentration de l'additif est de 0,05 % en masse ou plus.

8. Batterie secondaire à électrolyte non aqueux (100) selon l'une quelconque des revendications 1 à 7, dans laquelle le matériau contenant un élément silicium est un matériau composite, et le matériau composite inclut une phase conductrice d'ions lithium et des particules de silicium dispersées dans la phase conductrice d'ions lithium.
